Europäisches Patentamt

European Patent Office

Office européen des brevets

(11) Publication number: **0 510 805 A1**

## EUROPEAN PATENT APPLICATION

(21) Application number: **92302381.6**

(22) Date of filing: **19.03.92**

(51) Int. Cl.5: **C08J 3/12, C08J 3/00**

(30) Priority: **18.04.91 GB 9108219**

(43) Date of publication of application:
**28.10.92 Bulletin 92/44**

(84) Designated Contracting States:
**AT BE CH DE DK ES FR GB GR IT LI LU NL PT SE**

(71) Applicant: **ICI AMERICAS INC.**
**Concord Pike & New Murphy Road**
**Wilmington Delaware 19897(US)**

(72) Inventor: **Ross, Mark**
**10 Byron Drive**
**Nashua, New Hampshire 03062(US)**
Inventor: **Perito, Diane Carol**
**91 Fellsmere Road**
**Malden, Massachusetts 02148(US)**

(74) Representative: **Sheller, Alan et al**
**ICI Group Patents Services Dept. PO Box 6**
**Shire Park Bessemer Road**
**Welwyn Garden City, Herts, AL7 1HD(GB)**

(54) **Non-agglomerating suspension polymers.**

(57) Suspension polymer of glass transition temperature less than 50°C having anti-blocking granules, wherein said granules have an anti-blocking coating of an emulsion polymer of glass transition temperature greater than 50°C.

EP 0 510 805 A1

The present invention relates to anti-blocking suspension polymers, and to a process for their production.

Suspension polymers are polymers having a particulate granular or bead structure made using an aqueous suspension polymerisation process. Such a process is very well known and basically entails dispersing the monomer(s) to be polymerised in an aqueous medium and conducting the polymerisation in the presence of a suspension agent (or combination of suspension agents) and a monomer-soluble initiator (or combination of initiators), the aqueous medium being appropriately agitated (stirred) to keep the polymerisation ingredients and resulting polymer granules in suspension. Upon removal of the aqueous phase a particulate granular polymer, usually of particle size between 30 and 500 microns, is obtained. Suspension polymers are typically derived from various olefinically unsaturated monomers where polymerisation proceeds by a free radical polymerisation mechanism, the initiating free radicals being provided by decomposition of the initiator at the polymerisation temperature employed for the polymerisation process.

Suspension polymers are employed in a variety of applications; for example they may be fabricated into articles using techniques such as moulding and extrusion; they also find wide use in applications such as solvent borne coatings and photocopy toners. Most suspension polymers currently sold have a glass transition temperature (Tg) of 50°C or above. However, some suspension polymers which are sold have a Tg below 50°C, and with these we have encountered a problem. At high environmental temperatures, it is found that the granules of these suspension polymers show a distinct tendency to stick or lump together in the vessel in which they are being kept. We have observed this during the drying step of manufacture and, particularly, during storage of the dried granules in storage vessels such as drums. This phenomenon of sticking or lumping is hereinafter termed blocking.

This problem of blocking with low Tg suspension polymers is obviously extremely disadvantageous to the polymer manufacturer and even more so to the end-user who requires the suspension polymer to be easily handleable, e.g. free-flowing in the hoppers of fabricating machines such as extruders and moulding machines, and to have the shortest possible dissolution times in solvents (which a blocking product would tend to detract from).

We have now discovered how to overcome the blocking problem in low Tg suspension polymers discussed supra. This solution entails coating the granules of the suspension polymer with a shell of an emulsion polymer having a Tg greater than 50°C.

On the question of prior art in connection with this invention, we are aware of teachings relating to the production of emulsion-coated styrene polymer suspension polymers intended for the production of foamed articles.

Thus US 4307134 discloses a method for coating styrene polymer beads intended for the production of low density soft foamed articles by adding to the styrene polymer beads an emulsion of styrene monomer, a conjugated diene elastomer, and a plasticiser, followed by polymerisation of the styrene monomer to form an emulsion polymer coating around the styrene polymer beads. However this teaching is not concerned with the use of an emulsion polymer coating to inhibit low Tg suspension polymer granules from blocking. For example, polystyrene has a Tg of 100°C.

US 4333969, on the other hand, is directed to the use of emulsified styrene monomer to cause polystyrene beads to aggregate together to form beads of uniform size. This teaching therefore achieves the opposite of the present invention.

US 4333970 is concerned with the emulsion copolymerisation, in the presence of a polystyrene suspension polymer, of styrenic monomer and a conjugated diene-styrene macromonomer so as to form a coating around the polystyrene beads, in order to prevent lumping in pre-expanded (foamed) granules of the polystyrene when impregnated with a blowing agent. The teaching is specific to this use only and is not concerned with the inhibition of blocking in conventional (non-foamed) granules of low Tg polymers.

Finally, US 4385156 discloses a process for preparing heat resistant styrene polymer foams by polymerising an emulsion styrene/methacrylic acid copolymer in-situ round suspension styrene polymer beads intended for use in making foamed articles. The coating is used solely to raise the heat distortion temperature and the teaching is not concerned to prevent blocking in low Tg suspension polymers.

Therefore, according to the present invention there is provided a suspension polymer of Tg less than 50°C having anti-blocking granules, wherein said granules have an anti-blocking coating of an emulsion polymer of Tg greater than 50°C.

There is further provided according to the invention a process for the production of a suspension polymer of Tg less than 50°C having anti-blocking granules, wherein said process comprises the steps of:

(1) forming an aqueous suspension of a polymer having Tg less than 50°C which has been made using an aqueous suspension polymerisation process,

(2) combining the aqueous suspension formed in step (1) with an emulsion polymer of Tg greater than 50°C under conditions where the emulsion polymer forms an anti-blocking coating on the suspension polymer granules, and

(3) isolating the coated granules of the suspension polymer from the aqueous medium.

The product of this invention can therefore be considered as an anti-blocking granular polymeric material having granules of a suspension polymer of Tg less than 50°C coated with an anti-blocking coating of an emulsion polymer of Tg greater than 50°C.

In one useful embodiment of the invention, both the anti-blocking coatings of the emulsion polymer and the suspension polymer granules are organic solvent-soluble, allowing the dried granules to be dissolved in organic solvents to yield clear solutions and clear films derived therefrom. Useful organic solvents include suitable inert solvents such as the aromatic or aliphatic hydrocarbons such as toluene, xylenes, and benzene; esters such as ethyl acetate, butyl acetate, amyl acetate, and 2-(ethoxy)ethyl acetate, ketones such as acetone, methyl ethyl ketone, and diacetone alcohol; alcohols such as methanol, ethanol, and propanol; ethers such as dioxane, monomethyl ether of diethylene glycol and so on. Mixtures of solvents can be used. A polymer can be made solvent-soluble by appropriate adjustment of features such as its particular monomeric composition (type and amount) and/or molecular weight. In the latter respect weight average molecular weight of below 100,000 (particularly below 50,000) may be useful in assisting the attainment of solvent solubility.

By Tg is meant the glass transition temperature, which we have measured by differential scanning calorimetry.

The production of suspension polymers has been described supra in its basic or simplest format, although numerous variations on the basic theme are known and can be used if desired. The suspension agent is generally a protective colloid, examples of which include polyacrylic acid; cellulose derivatives such as methyl cellulose, carboxymethyl cellulose and hydroxyethyl cellulose; polyvinyl pyrrolidone; gelatin; and partially hydrolysed polyvinyl acetates (various degrees of hydrolysis). A material such as difficulty soluble inorganic phosphate is also known to be used as a suspension agent. Examples of monomer-soluble initiators which may be used include peroxy compounds such as lauroyl peroxide, benzoyl peroxide and di-tertiarybutyl peroxide, and azo compounds such as azo-bis-isobutyronitrile. Other materials may also be used in the suspension polymerisation if desired or as appropriate e.g. antifoam agents, water-soluble salts (like $Na_2SO_4$ or $MgSO_4$), buffers, surfactants, and chain transfer agents (like alkane thiols) to control molecular weight (and assist in providing organic solvent solubility where required).

The polymerisation medium is kept in vigorous agitation, usually with a stirring device, and polymerisation is initiated by heating the mixture to a selected temperature at which the initiator decomposes to initiate the polymerisation, e.g. by forming free radicals (in the case of free radical polymerisation of olefinically unsaturated monomers). The resulting polymer is formed in suspension in the shape of granules or beads, usually of diameter within the range of 30-500 microns (more usually 50-400 microns, particularly 50-200 microns). At this stage, even absent the resource of the present invention, the suspension is storage stable (at high environmental temperatures) for low Tg polymers as long as the agitation is continued. However upon removal of the aqueous phase (e.g. by filtration or centrifugation, followed by final drying in a device such as an oven or a fluid bed drier) the polymer beads of a low Tg suspension polymer, will (absent the resource of the present invention) begin to block at high environmental temperatures (particularly those above the polymer Tg), especially at the bottom of large storage drums where heavy pressure is exerted by the material resting above it. The presence of a coating of an emulsion polymer of Tg greater than 50°C on the granules of the low Tg suspension polymer overcomes this problem completely or substantially.

Examples of monomers which are commonly used for the preparation of suspension polymers with Tg less than 50°C are olefinically unsaturated free-radical addition-polymerisable monomers of the kind which will yield such low Tg polymer by homopolymerisation and/or by copolymerisation with other olefinically unsaturated monomers. More specifically, examples of such monomers include certain alkyl or cycloalkyl esters of acrylic or methacrylic such as n-butyl methacrylate, n-butyl acrylate, hexadecyl methacrylate, 2-ethylhexyl acrylate, n-propyl methacrylate, n-butyl chloroacrylate, hexadecyl acrylate and cyclohexyl acrylate; these can be homopolymerised or copolymerised with one of more of each other and/or with other types of monomer(s), e.g. acrylic or methacrylic acid, or methyl methacrylate, provided the resulting Tg is less than 50°C.

For practical purposes, the lower limit of Tg for the suspension polymer of Tg less than 50°C will usually be about 5°C.

The emulsion polymer of Tg greater than 50°C may also be prepared by the homo- or co-polymerisation of appropriate olefinically unsaturated monomers, particularly certain acrylic and styrenic monomers, using a free radical addition polymerisation process. Examples of such monomers which may be used particularly include: certain alkyl esters of acrylic or methacrylic acid, such as methyl methacrylate, ethyl methacrylate, and isobutyl methacrylate; certain alpha,beta-olefinically unsaturated carboxylic acids such as acrylic acid and methacrylic acid; certain olefinically unsaturated nitriles such as acrylonitrile and methacrylonitrile; and certain styrenic monomers such as styrene, alpha-methylstyrene, and para-methylstyrene. Such monomers can be homopolymerised or copolymerised with one or more of each other and/or with other types of monomer(s) which would, if polymerised alone, give low Tg, so long as the Tg of the copolymer is greater than 50°C.

The Tg of the emulsion polymer should, as discussed supra, be greater than 50°C, and is preferably greater than 85°C. The upper limit is in principle unlimited, although for practical purposes the upper limit of Tg for the emulsion polymer will usually be about 120°C.

The emulsion polymer may be prepared by using a conventional aqueous emulsion polymerisation process. Such a process is extremely well known and need not be described in detail. Suffice to say that such a process involves dispersing the monomer(s) in an aqueous medium and conducting polymerisation, with agitation (stirring), in the presence of a water-soluble initiator(s) (a free-radical forming one when addition polymerising olefinically unsaturated monomer) which provides initiating species at an appropriate polymerisation temperature, and surfactant material(s) which assists in monomer and resulting polymer particle stabilisation. Typical initiators are persulphates such as Na, K or $NH_4$ persulphate or peroxides such as hydrogen peroxide; and typical surfactants are materials such as anionic or nonionic emulsifiers such as Na salts of dialkylsulphosuccinates, Na salts of sulphate oils, Na salts of alkyl sulphonic acids, Na, K and ammonium alkyl sulphates, C22-24 fatty alcohols, ethoxylated fatty acids and/or fatty amides, and Na salts of fatty acids as Na stearate and Na oleate. Numerous variants are of course known for emulsion polymerisation; e.g. chain transfer agents (like alkane thiols) may be used to control molecular weight (and assist in providing organic solvent solubility if this is required). The resulting product is an aqueous emulsion of the polymer particles of colloidal size, typically having an average particle size (number average of the particle diameter) within the range 0.03 to 0.4 microns (particularly 0.05 to 0.4 microns), i.e. very much smaller than the granules of a suspension polymer (e.g. by the order of something like a thousand). Such an aqueous emulsion of a polymer is very commonly referred to as an aqueous polymer latex

Many aqueous emulsions of polymers of Tg greater than 50°C are available commercially, and so need not be especially prepared for the purposes of this invention, but can be bought in.

The coating of the emulsion polymer around the granules of the suspension polymer in step (2) of the process may be effected using any appropriate method. Conveniently, an aqueous emulsion of the polymer of Tg greater than 50°C is combined with the aqueous suspension formed in step (1) (this will normally be the aqueous suspension resulting directly from the suspension polymerisation, but need not necessarily be so), and the mixture is heated for an appropriate time at a temperature above the softening point of the low Tg suspension polymer to form the coating. The temperature of the aqueous suspension may be raised to above softening point before or after addition of the aqueous emulsion (usually before). If the suspension polymer has been prepared in the presence of a water-soluble salt, such as $Na_2SO_4$ or $MgSO_4$ (usually added in the form of its hydrate), the remaining presence of such a salt in the resulting aqueous suspension will assist in the effective formation of an anti-blocking coating of the emulsion polymer.

The resulting low Tg suspension polymer granules according to the invention, are observed to have a continuous coating or shell of the high Tg emulsion polymer. This effect can readily be observed by studying the particles using scanning electron microscopy.

The amount of emulsion polymer employed when making the anti-blocking grnaules should of course be sufficient to form an adequate and effective anti-blocking coating on the suspension granules. This may vary according to the particular polymers being used, the size of the suspension polymer granules, and the actual process of coating, but generally speaking the amount of emulsion polymer used will usually be at least 0.5% by weight (often at least 1% by weight), based on the weight of the suspension polymer present (considering emulsion and suspension polymer solids). The upper level for the amount of emulsion polymer is in principle unlimited; any excess of a coating amount will simply be washed away during the suspension polymer work up. For practical purposes, however, e.g. from a point of view of cost and unacceptable loss of emulsion polymer to the environment, the amount of emulsion polymer will often be less than or equal to 20% w/w of the weight of suspension polymer. A typical range is 1.0 to 20% w/w (more typically 1 to 10% w/w, or 2 to 10% w/w).

The present invention is now illustrated by reference to the following examples.

In the examples, blocking is tested by means of a test that simulates the effect of the weight of polymer granules in a drum upon standing at an elevated temperature. 35g of polymer granules are placed in a glass jar and covered with a cardboard separator. 863.6g of steel shot is placed on top of the separator and the jar is placed in an oven at 37.8°C (100°F) for 24 hours. The shot is carefully removed along with the cardboard separator. The jar is tapped on a bench top once to loosen the granules. If the granules are then free flowing, the test is rated as a pass. If lumps of granules are present after the granules have poured out of the jar, the test is rated as marginal. No flow or loosening of the granules is a failure.

Also in the examples the Tg's of copolymers are measured by differential scanning calorimetry. In the examples the words NEOCRYL, ACRYSOL, ELVANOL, and GELVATOL are registered trade marks.

Example 1

In this example, an acrylic suspension polymer was prepared having a Tg of 30°C and with no added emulsion polymer to form a coating on the granules of the suspension polymer.

To a 2-gallon round bottomed flask was added 911.4g of water (purified by reverse osmosis), 9.8g of ACRYSOL A-1 (polyacrylic acid suspension agent), and 3.1g sodium sulphate. A mixture consisting of 451.9g n-butyl methacrylate, 4.6g methacrylic acid, 7.4g lauroyl peroxide (initiator), and 1.74g n-dodecyl mercaptan (chain transfer agent) was added to the reaction vessel. Under vigorous stirring, the suspension mixture was heated to 75°C. After 10 minutes at 75°C, 3.0ml of ELVANOL 50-42 (polyvinyl alcohol suspension agent) was added to further stabilise the suspension. At 50 minutes into the reaction, an additional 3.0ml of ELVANOL 50-42 was added to the polymerisation medium. The mixture was stirred at 75°C for a total of 2 hours at which time the resulting polymer granules had become hard. The temperature was raised to 85°C and the reaction continued for an additional hour. The resulting granular polymer product was isolated by filtration, washed with water, and finally oven dried.

Examples 2, 3 and 4

In these examples, the procedure of Example 1 for the production of a suspension polymer was repeated except that at the end of the 85°C hold (a temperature well above the softening point of the suspension polymer), NEOCRYL A-550 high Tg polymer aqueous emulsion (Tg = 122°C, average particle size 70-80nm; a methyl methacrylate rich copolymer) was added (11.6g in Example 2, 23.2g in Example 3, and 58.2g in Example 4, representing 1.0%, 2.0%, and 5.0% w/w emulsion solids on the suspension polymer) and stirred for 0.5 hours before cooling and isolation. (NEOCRYL A-550 is commercially available from ICI Resins US).

Example 5

In this example, an acrylic suspension polymer was prepared having a Tg of 30°C; also it was prepared in the presence of hydrated magnesium sulphate instead of sodium sulphate. As in Examples 2 to 4, the aqueous polymer suspension from polymerisation was treated at 85°C with NEOCRYL A-550 high Tg polymer aqueous emulsion.

To a 2 gallon round bottomed flask was added 1046.07g of water (purified by reverse osmosis), 9.9g of ACRYSOL A-1 and 5.0g magnesium sulphate heptahydrate. A mixture consisting of 309.18g methyl methacrylate, 252.92g n-butyl acrylate, 6.20g lauroyl peroxide (initiator), and lauryl mercaptan (chain transfer agent) was added to the reaction vessel. Under vigorous stirring, the suspension mixture was heated to 75°C and held at 75°C for 2.5 hours. 3.20g GELVATOL 2090 (polyvinyl alcohol suspension agent) was added and the batch heated to 80°C and held at this temperature for 30 minutes. The batch was then heated to 85°C and held at this temperature for 1 hour. Finally, 14.09g NEOCRYL A-550 high Tg polymer aqueous emulsion was added (representing 1.0% w/w emulsion solids on the suspension polymer) and the mixture held (with stirring) for 30 minutes before cooling and isolation (by filtration) and washing with water of the resulting granular polymer product amd drying.

Example 6

In this example, an acrylic suspension polymer was prepared having a Tg of 30°C and the aqueous suspension from polymerisation treated at 85°C with an especially prepared high Tg acrylic polymer aqueous emulsion.

The aqueous emulsion of the acrylic emulsion polymer, which had Tg of 117°C and a weight average molecular weight of below 50,000, was prepared as follows. To a 1-liter round bottomed flask was added 247.90 g of water (purified by reverse osmosis), 10.00 g of 30% aqueous solution of sodium lauryl sulphate (emulsifier) and 1.30 g sodium bicarbonate. A mixture 255.84 g of methyl methacrylate, 2.60 g methacrylic acid and 2.50 g n-dodecyl mercaptan was prepared (monomer feed). The initiator feed was prepared by mixing 0.80 g of ammonium persulphate (initiator) with 80.00 g of water (purified by reverse osmosis). Under vigorous stirring, 10% of the monomer feed and 10% of the initiator feed were added to the reactor and the mixture was heated to 85°C. Once the reaction temperature of 85°C was obtained, the monomer feed was added over a 1 hour period and the initiator feed was added simultaneously over a 1.25 hour period. Upon completion of the initiator feed, the reaction was continued at 85°C for an additional 0.5 hours before cooling.

The acrylic suspension polymerisation and subsequent treatment with the acrylic polymer emulsion were carried out as follows. To a 2 litre reactor was added 967.1 g of water (purified by reverse osmosis), 10.38 g of ACRYSOL A-1 (polyacrylic suspension agent), and 3.28 g sodium sulphate. A mixture consisting of 478.74 g n-butyl methacrylate, 4.87 g methacrylic acid, 7.84 g lauroyl peroxide (initiator), and 1.84 g n-dodecyl mercaptan (chain transfer agent) was added to the reaction vessel. Under vigorous stirring, the suspension mixture was heated to 75°C. The mixture was stirred at 75°C for a total of 1.5 hours at which time the resulting polymer granules had become hard. To the aqueous suspension of the resulting acrylic polymer was then added 10.05 g of the aqueous emulsion of the acrylic polymer prepared as described above (Tg = 117°C, average particle size 70-80 nm, weight average molecular weight = ca. 32,500) representing 1.0% ww emulsion solids on the suspension polymer. The temperature was raised to 80°C and held at that temperature of 0.5 hours. The temperature was then raised to 85°C and the treatment continued for an additional 1.5 hours before cooling, isolation and drying.

The granular polymeric product was dissolvable in toluene to yield clear solutions from which clear films could be formed.

Electron scanning microscopy showed there was a definite continuous coating of the emulsion polymer particles in the suspension polymer granules from Examples 3, 4, 5 and 6 while the granular polymer from Example 1 of course showed no coating. The coating of the suspension polymer granules from Example 2 was incomplete and had holes in it.

The results of the blocking tests are given in the following table.

| Example | % Emulsion Polymer | Block Rating |
|---------|--------------------|--------------|
| 1 | None | Fail |
| 2 | 1.0 | Fail |
| 3 | 2.0 | Pass |
| 4 | 5.0 | Pass |
| 5 | 1.0 | Pass |
| 6 | 1.0 | Pass |

It will be noted that in the system employed for Examples 2, 3 and 4, a level of 1% emulsion polymer used in the coating procedure failed to provide an anti-blocking coating for the suspension polymer granules, while levels of 2% and 5% did provide an effective anti-blocking coating. On the other hand, for the systems employed in Example 5 and 6, a level of 1% emulsion polymer was sufficient to provide an effective anti-blocking coating for the suspension polymer used in the coating procedure granules.

**Claims**

1.  Suspension polymer of glass transition temperature less than 50°C having anti-blocking granules, wherein said granules have an anti-blocking coating of an emulsion polymer of glass transition temperature greater than 50°C.

2.  Suspension polymer according to claim 1 wherein the glass transition temperature of said emulsion polymer is greater than 85°C.

3.  Suspension polymer according to either claim 1 or claim 2 wherein the amount of emulsion polymer used in the formation thereof is within the range of 0.5 to 20% w/w based on the weight of the suspension polymer.

4.  Suspension polymer according to any one of the preceding claims wherein both the anti-blocking coatings of the emulsion polymer and the suspension polymer granules are organic solvent-soluble.

5. Suspension polymer according to any one of the preceding claims wherein the granules of said suspension polymer are of diameter within the range of from 50 to 400 microns.

6. Suspension polymer according to any one of the preceding claims wherein the coating of the emulsion polymer is derived from an aqueous polymer emulsion of average particle size within the range of from 0.03 to 0.4 microns.

7. Suspension polymer according to any one of the preceding claims wherein said suspension polymer is derived from the homo-or copolymerisation of a monomer system which includes at least one monomer selected from n-butyl methacrylate, n-butyl acrylate, hexadecyl methacrylate, 2-ethylhexyl acrylate, n-propyl methacrylate, n-butyl chloroacrylate, hexadecyl acrylate and cyclohexyl acrylate.

8. Suspension polymer according to any one of the preceding claims wherein said emulsion polymer providing the anti-blocking is derived from the homo-or copolymerisation of a monomer system which includes at least one monomer selected from methyl methacrylate, ethyl methacrylate, isobutyl methacrylate, acrylic acid, acrylonitrile, methacrylonitrile, styrene, alpha-methylstyrene, and para-methylstyrene.

9. Process for the production of a suspension polymer of glass transition temperature less than 50°C having anti-blocking granules, wherein said process comprises the steps of:
   (1) forming an aqueous suspension of a polymer having glass transition temperature less than 50°C which has been made using an aqueous suspension polymerisation process,
   (2) combining the aqueous suspension formed in step (1) with an emulsion polymer of glass transition temperature greater than 50°C under conditions where the emulsion polymer forms an anti-blocking coating on the suspension polymer granules, and
   (3) isolating the coated granules of the suspension polymer from the aqueous medium.

10. Process according to claim 9 wherein the coating of the emulsion polymer round the granules of suspension polymer in step (2) is effected by combining the aqueous suspension formed in step (1) with an aqueous emulsion of the emulsion polymer of glass transition temperature above 50°C and heating the mixture at a temperature above the softening point of the suspension polymer to form the coating.

11. Process according to either claim 9 or claim 10 wherein the glass transition temperature of said emulsion polymer used in step (2) is greater than 85°C.

12. Process according to any one of claims 9 to 11 wherein the amount of emulsion polymer used in step (2) is within the range of from 1 to 20% w/w based on the weight of the suspension polymer.

13. Process according to any one of claims 9 to 12 wherein both the anti-blocking coating of the emulsion polymer and the suspension polymer granules are organic solvent-soluble.

14. Process according to any one of claims 9 to 13 wherein the granules of said suspension polymer are of diameter within the range of from 50 to 400 microns.

15. Process according to any one of claims 9 to 14 wherein the aqueous polymer used in step (2) is derived from an aqueous polymer emulsion of average particle size within the range of from 0.03 to 0.4 microns.

16. Process according to any one of claims 9 to 15 wherein said suspension polymer is derived from the homo-or copolymerisation of a monomer system which includes at least one monomer selected from n-butyl methacrylate, n-butyl acrylate, hexadecyl methacrylate, 2-ethylhexyl acrylate, n-propyl methacrylate, n-butyl chloroacrylate, hexadecyl acrylate and cyclohexyl acrylate.

17. Process according to any one of 9 to 16 claims wherein said emulsion polymer providing the anti-blocking is derived from the homo-or copolymerisation of a monomer system which includes at least one monomer selected from methyl methacylate, ethyl methacrylate, isobutyl methacrylate, acrylic acid, acrylonitrile, methacrylonitrile, styrene, alpha-methylstyrene, and para-methyl styrene.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 082 455 (RÖHM GMBH) <br> * page 2, line 25 - page 14, line 25 * <br> * examples 8-15 * <br> * claims 1-4,6-9,11-13 * <br> ---- | 1-17 | C08J3/12 <br> C08J3/00 |
| X | US-A-4 097 553 (E.R. NOVAK) <br> * example 1 * <br> * column 5, comparison A, part four * <br> * claims 1-5 * | 1,3,7,8 | |
| A | idem. | 2,5,6, 9-17 | |
| | ----- | | |

| | | | TECHNICAL FIELDS SEARCHED (Int. Cl.5) |
|---|---|---|---|
| | | | C08J |

The present search report has been drawn up for all claims

| Place of search | Date of completion of the search | Examiner |
|---|---|---|
| THE HAGUE | 27 JULY 1992 | BETTELS B.R. |